(19) Europäisches Patentamt
European Patent Office
Office européen des brevets

(11) **EP 3 436 538 B1**

(12) **EUROPÄISCHE PATENTSCHRIFT**

(45) Veröffentlichungstag und Bekanntmachung des Hinweises auf die Patenterteilung:
**15.06.2022 Patentblatt 2022/24**

(21) Anmeldenummer: **17714702.2**

(22) Anmeldetag: **29.03.2017**

(51) Internationale Patentklassifikation (IPC):
***C09J 7/00*** *(2018.01)*

(52) Gemeinsame Patentklassifikation (CPC):
**C09J 7/22; B65D 73/0078; B65D 81/30; C09J 7/38;**
C09J 2301/124; C09J 2301/1242

(86) Internationale Anmeldenummer:
**PCT/EP2017/057424**

(87) Internationale Veröffentlichungsnummer:
**WO 2017/167806 (05.10.2017 Gazette 2017/40)**

(54) **DARREICHUNGSFORM FÜR DOPPELSEITIG WIRKSAME KLEBEMITTEL**

DOSAGE FORM FOR AN ADHESIVE WITH A DOUBLE-SIDED ADHESIVE EFFECT

FORME DE PRÉSENTATION POUR ADHÉSIF DOUBLE FACE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2016 DE 102016205166**

(43) Veröffentlichungstag der Anmeldung:
**06.02.2019 Patentblatt 2019/06**

(73) Patentinhaber: **TESA SE**
**22848 Norderstedt (DE)**

(72) Erfinder:
• **WEIGL, Robert**
**22117 Hamburg (DE)**
• **MASSON, Martje**
**20148 Hamburg (DE)**
• **SEPPELT, Matthias**
**77770 Durbach (DE)**
• **ZAPF, Bernd**
**77723 Gengenbach (DE)**

(74) Vertreter: **tesa SE**
**Hugo-Kirchberg-Straße 1**
**22848 Norderstedt (DE)**

(56) Entgegenhaltungen:
**WO-A1-96/39339      DE-A1-102013 106 126**
**US-A- 5 657 869**

## Beschreibung

Die vorliegende Erfindung betrifft eine Darreichungsform zur Entnahme wenigstens einer doppelseitig wirksamen Klebemittel-Anordnung, umfassend:

(a) mindestens ein Trägerblatt mit einer anti-Haft beschichteten Vorderseite,
(b) wenigstens eine auf dem Trägerblatt angeordnete Klebemittel-Anordnung und
(c) ein 4n-seitiges Faltblatt, dessen Vorderfläche und Rückfläche in entfalteter Form durch n Faltlinien in jeweils 2n Seiten unterteilt werden, wobei n eine natürliche Zahl ≥ 1 ist,

wobei die der beschichteten Vorderseite gegenüberliegende Rückseite des Trägerblatts durch ein Verbindungsmittel permanent mit einem vorderseitigen Flächenbereich des entfalteten Faltblatts verbunden ist und die Projektion jedes Trägerblatts innerhalb einer Seite des 4n-seitigen Faltblatts liegt, und wobei die Klebemittel-Anordnung ein flächiges und auf seinen beiden Hauptflächen haftklebriges Klebemittel und eine dessen erste Hauptfläche weitestgehend vollständig abdeckende Schutzfolie umfasst und die Klebemittel-Anordnung über die zweite Hauptfläche des Klebemittels ablösbar auf der beschichteten Vorderseite des Trägerblatts haftet.

## Stand der Technik

Es sind doppelseitig wirksame Klebemittel am Markt erhältlich, die zusammen mit daran angepassten Haltekörpern in einer Umverpackung, wie beispielsweise einer Sichtverpackung (Blister) mit transparentem Sichtfenster, angeboten werden. Als Packungsbeilage ist den Produkten meist ein bedrucktes Faltblatt mit Anwendungshinweisen und Produktinformationen den Produkten beigelegt.

Nachteilig zeigte sich, dass nur ein geringer Teil der Anwender derartige Anwendungshinweise in ausreichender Art würdigt oder überhaupt registriert. Oft wird die Umverpackung mit den Anwendungshinweisen entsorgt, während die Klebemittel - als für den Anwender einzig werthaltigen Teil des Gesamtprodukts - platzsparend in Schubladen oder ähnlichen Lagerbehältnissen bis zur Verwendung aufbewahrt werden. In der Folge kann es nach einer nicht anwendungsgerechten Applikation eines Klebemittels zur unerwünschten Ablösung des Selben kommen und ein damit beispielhaft an der Wand befestigter Gegenstand fällt zu Boden und ist möglicherweise beschädigt. Der Anwender ist in diesem Falle oft mit dem Gesamtprodukt unzufrieden und wird auf andere Lösungen ausweichen, obwohl die Klebemittel bei korrekter Anwendung entsprechend der Auslobung gehalten hätten.

Aus der WO 96/039339 A1 ist ein Faltblatt bekannt, das selbstklebende Produkte beinhaltet. Die hier beschriebene Darreichungsform umfasst einen Informationsträger in Form eines Faltblatts mit einem Cover, von dessen Innenfläche selbstklebende Artikel entnommen werden können. Diese sind auf einzelnen Seiten ablösbar befestigt, die wiederum übereinander angeordnet und an einer Längskante mit dem Cover in Form eines Heftchens verbunden sind. Auch bei dieser Ausgestaltung können die auf einzelnen Seiten des Heftchens mit den selbstklebenden Produkten leicht vom Cover getrennt werden, sodass das vorstehende Problem nicht als in zufriedenstellender Weise gelöst angesehen werden kann.

Ebenfalls nachteilig an derzeit verwendeten Darreichungsformen für doppelseitig selbstklebende Elemente ist der hohe notwendige Aufwand, um diese bis zum Gebrauch vor Umwelteinflüssen, insbesondere UV-Strahlung zu schützten. Oft sind die selbstklebenden Elemente aus diesem Grund mit entsprechenden Stabilisatoren ausgerüstet. Da die schützende Wirkung von Stabilisatoren, insbesondere von Antioxidantien und Radikalfängern, durch die Einwirkung von UV-Strahlung mit der Zeit nachlässt, besteht ein Interesse, Klebemittels während der Lagerung durch zusätzliche Maßnahmen vor UV-Strahlen zu schützen.

Dazu schlägt die EP1 103 489 B1 als Verpackungsmittel unter anderem spezielle Blisterverpackungen vor, deren für sichtbares Licht transparente Folienhaube für UV-Strahlung nahezu undurchlässig ist. Zusätzlich oder alternativ können einzelne oder mehrere Klebemittel von einer Hülle aus Siegelpapier oder Siegelfolie umgeben sein. Diese schützen das Produkt zuverlässig vor UV-Strahlung, auch wenn eine Umverpackung mit nur unzureichendem UV-Schutz gewählt wird. Nachteilig an solchen allseitig den Klebemittel umgebenden Schutzhüllen ist die Notwendigkeit, diese vor dem Gebrauch jedes Klebemittels zeitaufwändig aufzureißen. Auch die Verpackung der Klebemittel in solche Siegelhüllen ist aufwändig und mit entsprechenden Kosten verbunden.

## Aufgabe der Erfindung

Die Aufgabe der vorliegenden Erfindung bestand somit darin, eine verbesserte Darreichungsform der eingangs genannten Art zu schaffen, die die Möglichkeit bietet, Anwendungshinweise in einer Form zu präsentieren, die den Anwender dabei unterstützen, die wichtigen Hinweise zur Kenntnis zu nehmen und diese umzusetzen. Wünschenswert ist es weiterhin, dass aus der Darreichungsform die Klebemittel leicht entnommen werden können. Ferner soll die Darreichungsform einen wirksamen Schutz für die darin enthaltenen Klebemittel gegen UV-Strahlung bieten.

## Lösung der Aufgabe

Die Aufgabe wird gelöst durch eine Darreichungsform zur Entnahme wenigstens einer doppelseitig wirksamen Klebemittel-Anordnung, umfassend:

> (a) mindestens ein Trägerblatt mit einer anti-Haft beschichteten Vorderseite,
> (b) wenigstens eine auf dem Trägerblatt angeordnete Klebemittel-Anordnung und
> (c) ein 4n-seitiges Faltblatt, dessen Vorderfläche und Rückfläche in entfalteter Form durch n Faltlinien in jeweils 2n Seiten unterteilt werden, wobei n eine natürliche Zahl $\geq 1$ ist,

wobei die der beschichteten Vorderseite gegenüberliegende Rückseite des Trägerblatts durch ein Verbindungsmittel permanent mit einem vorderseitigen Flächenbereich des entfalteten Faltblatts verbunden ist und die Projektion jedes Trägerblatts innerhalb einer Seite des 4n-seitigen Faltblatts liegt, und wobei die Klebemittel-Anordnung ein flächiges und auf seinen beiden Hauptflächen haftklebriges Klebemittel und eine dessen erste Hauptfläche weitestgehend vollständig abdeckende Schutzfolie umfasst und die Klebemittel-Anordnung über die zweite Hauptfläche des Klebemittels ablösbar auf der beschichteten Vorderseite des Trägerblatts haftet, wobei die Darreichungsform dadurch gekennzeichnet ist, dass

- eine erste Faltlinie der n Faltlinien das entfaltete Faltblatt als Halbierungsfaltung vorderseitig in zwei Halbflächen teilt und mit Sicht auf die entfaltete Vorderseite des Faltblatts als durchgehende Talfalte ausgebildet ist, und
- die weiteren (n-1) Faltlinien die erste Faltlinie im rechten Winkel kreuzen und die (n-1) weiteren Faltlinien bereichsweise als Talfalte und bereichsweise als Bergfalte ausgeführt sind, wobei die Faltrichtung der weiteren (n-1) Faltlinien jeweils am Kreuzungspunkt wechselt.

Der Erfindung liegt die Erkenntnis zugrunde, dass mit dieser erfindungsgemäßen Darreichungsform die Sichtbarkeit von Anwendungshinweisen erhöht und zugleich eine einfache Entnahme der Klebemittel ermöglicht wird, wobei eine platzsparende und organisierte Form der Aufbewahrung der Klebemitteln realisiert werden kann. Erreicht wird dies dadurch, dass der Verbraucher nur an das eigentliche Produkt, als das beziehungsweise die Klebemittel gelangen kann, wenn das Faltblatt vollständig entfaltet ist und damit die Anwendungshinweise lesbar sind. Der Blick des Anwenders wird deshalb mit hoher Wahrscheinlichkeit auf die Anwendungshinweise neben dem Trägerblatt gelenkt. Bei der in der vorgenannten WO 96/039339 A1 beschriebenen Ausführung kann der Verbraucher das Produkt auch erreichen, ohne dass die Anwendungshinweise lesbar sind. Ferner bietet die erfindungsgemäße Darreichungsform einen preisgünstig realisierbaren Schutz der Klebemittel vor schädlichen Umwelteinflüssen, insbesondere UV-Strahlung.

Dadurch, dass die Projektion jedes Trägerblatts innerhalb einer Seite des 4n-seitigen Faltblatts liegt wird zudem verhindert, dass das Trägerblatt und die darauf vorliegende(n) Klebemittel-Anordnung(en) 3 beim Faltvorgang des Faltblatts geknickt werden.

In bevorzugter Weise ist die erfindungsgemäße Darreichungsform dadurch gekennzeichnet, dass der vorderseitige Flächenbereich des entfalteten Faltblatts in dem nicht durch das Trägerblatt abgedeckten Bereich wenigstens abschnittsweise bedruckt ist, wobei die Bedruckung eine Handhabungsvorschrift zur Anwendung des Klebemittels umfasst. Neben der Handhabungsvorschrift kann der Aufdruck auch andere Bestandteile enthalten, wie beispielsweise firmenmäßige Kennzeichnungen des Herstellers, Entsorgungshinweise, Sicherheitsinformationen, maschinenlesbare Codes wie QR-Codes oder Barcodes, Herstellerdaten und dergleichen mehr.

Ein weiterer Vorteil der erfindungsgemäßen Darreichungsform besteht darin, dass die beiden haftklebrigen Hauptflächen der Klebemittel durch ihre Lage auf dem Trägerblatt unterscheidbar sind. Es können somit Klebemittel eingesetzt werden, deren Klebeeigenschaften auf beiden Hauptflächen unterschiedlich sind. Eine gesonderte Kennzeichnung der Klebeflächen ist dann wegen der Lage auf dem Trägerblatt nicht mehr erforderlich.

Der unbestimmte Ausdruck "ein" steht im Allgemeinen für "wenigstens ein" im Sinne von "ein oder mehr". Der Fachmann versteht je nach Situation, dass nicht der unbestimmte Artikel sondern der bestimmte Artikel "ein" im Sinne von "1" gemeint sein muss bzw. der unbestimmte Artikel "ein" auch in einer Ausführungsform den bestimmten Artikel "ein" (1) mit umfasst.

Alle hierin beschriebenen bevorzugten Ausführungsformen sind miteinander kombinierbar, solange sie nicht geltenden Naturgesetzten widersprechen.

## Klebemittel / zugentklebbare Streifen

Im Rahmen der vorliegenden Erfindung wird unter einem doppelseitig wirksamen Klebemittel - nachfolgend auch kurz Klebemittel genannt - ein in der Normalprojektion rechteckiger, vieleckiger oder runder Stanzling verstanden, der auf beiden äußeren Hauptflächen jeweils eine Haftklebemasseschicht trägt. Die Klebemittel können eine innenliegende Trägerschicht aufweisen oder trägerlos ausgestaltet sein.

Bei der erfindungsgemäß eingesetzten Klebemittel-Anordnung handelt es sich um ein Klebemittel, das einseitig mit einer Schutzfolie versehen ist. Alternativ kann die Bedeckung auch über einen Schutzfolienzuschnitt erfolgen. Der Schutzfolienzuschnitt bedeckt im Unterschied zu den vorhergehenden Ausführungen zugleich mehrere doppelseitig wirksame Klebemittel. Hinsichtlich der für Schutzfolienzuschnitte einsetzbaren Materialien gilt im Wesentlichen dasselbe wie für die Schutzfolien.

Unterschieden wird zwischen Klebemittel, die einen homogenen einschichtigen Aufbau aufweisen, also ausschließlich aus Haftklebemasse bestehen, und mehrschichtigen Klebemittel. Letztere verfügen über eine Trägerschicht, die beidseits mittelbar oder unmittelbar mit einer äußeren Haftklebemasseschicht in Verbindung steht. Bei mehrschichtigen Klebemitteln lässt sich weiterhin unterscheiden zwischen symmetrischen und unsymmetrischen Schichtaufbauten. Bei letzterem unterscheiden sich die Eigenschaften der beiden haftklebrigen Hauptflächen, so kann es beispielsweise erwünscht sein, dass die erste haftklebrige Hauptfläche unter definierten Bedingungen eine höhere Klebkraft aufweist als die zweite haftklebrige Hauptfläche.

Um die haftklebrigen Flächen des Klebemittels vor der Anwendung vor Kontaminationen und dem unbeabsichtigten Festkleben zu schützen, sind diese üblicherweise mit einer Schutzfolie eingedeckt. Alternativ wird diese Schutzfolie auch als Release-Liner oder Abdeckstreifen bezeichnet. Als Schutzfolie sei hier ein Papier- oder Folienzuschnitt definiert, dessen Abmessungen in Breite und Länge näherungsweise den Flächendimensionen des eingedeckten Klebemittels entsprechen und der einseitig oder beidseitig eine Trennschicht beziehungsweise eine Antihaftschicht mit niedriger Oberflächenenergie trägt. Diese Trennschicht kann beispielsweise ein Silikontrennlack sein. Die Trennschicht der Schutzfolie hat im Kontakt mit der haftklebrigen Masse des Klebemittels die Funktion sich durch eine definierte Kraft ablösen zu lassen.

Spezielle Ausführungen von Klebemitteln, sogenannte zugentklebbare Streifen, die im Rahmen der vorliegenden Erfindung bevorzugt sind, sind bei Bedarf rückstandsfrei durch dehnendes Verstrecken in der Verklebungsebene wieder entfernbar. Dazu kann der zugentklebbare Streifen einen an die Schmalseite des Streifens angrenzenden Anfasserbereich besitzen, der beidseitig nicht-klebend ausgerüstet ist. Dieser Anfasserbereich kann zwischen zwei Fingerbeeren der Hand ergriffen, und durch Aufbringen einer Zugkraft, die in Längsrichtung des Klebestreifens auf ihn einwirkt und in einem Winkel zwischen -45° und 45° zur Verklebungsebene steht, aus der Klebfuge gezogen werden.

Eine bevorzugte Darreichungsform umfasst demnach wenigstens ein Klebemittel, das zugentklebbar ist und an zwei vicinal gegenüberliegenden Teilbereichen seiner selbstklebenden Hauptflächen in der Nähe eines freien Endes des Klebemittels nicht klebend ausgerüstet ist, um einen nicht klebenden Anfasserbereich zur Handhabung des Klebemittels zu bilden.

Bei dieser Ausgestaltung kann die Normalprojektion des Anfasserbereiches des Klebemittels auf das Faltblatt in einer Richtung parallel zur zweiten Faltlinien weiter von der ersten durchgehenden Talfalte entfernt sein, als der Mittelpunkt jeder der klebenden Hauptflächen desselben Klebemittels. Hierdurch wird eine besonders komfortable Entnahme der Klebemittel ermöglicht. Ist das Faltblatt als Tasche ausgestaltet, kann hierdurch zudem der Schutz der gegebenenfalls UV-sensiblen Haftschicht der Klebemittel erhöht werden, da die Klebemittel-Anordnungen bei dieser Ausführungsform so positioniert sind, dass die Anfasserbereiche zur Öffnung der Tasche gerichtet sind. Sollte UV-Strahlung durch die einzige offene Seite in die Tasche eindringen, treffen sie auf die Anfasserbereiche der Klebemittel-Anordnungen. Diese bilden zum einen durch die Anfasserfolienstreifen eine zusätzliche Barriere für UV-Strahlung, zum anderen ist eine Verringerung der Klebkraft in einem Bereich der nicht kleben soll wenig nachteilig.

Beispiele für doppelseitig klebende zugentklebbare Streifen, die sich unter Zugbelastung elastisch, plastisch oder elastisch-plastisch dehnen, und dadurch vom Untergrund lösen, geben unter anderem die Schriften US 4 024 312, DE 3 331 016, WO 1992 011 332, DE 4 222 849, WO 1995 006 691, DE 19 531 696, DE 19 626 870, DE 19 649 727, DE 19 649 728, DE 19 649 729, DE 19 708 366, DE 19 720 145, WO 1999 031 193 und WO 1999 037 729.

Die Schrift EP 845 517 B1 nennt Beispiele für kreisförmige und polygonale Ausführungen zugentklebbarer Streifen einem oder mehreren Anfasserbereichen. Die jeweiligen Anfasserbereiche dieser Klebemittel entstehen, indem diese Bereiche mit einseitig oder beidseitig silikonisierten Folienstreifen eingedeckt werden. Alternativ können die ansonsten haftklebrigen Bereiche durch Bestäuben mit Pudern oder Pigmenten wie Titandioxid, oder durch lokale Bestrahlung mit elektromagnetischen Wellen inertisiert werden, da eine Haftklebrigkeit in diesem Bereich unerwünscht ist.

Doppelseitig wirksame Klebemittel können zur Befestigung von Haltekörpern oder Gegenständen an Wänden eingesetzt werden. Weitere beispielhafte Anwendungen von zugentklebbaren Streifen sind in den Schriften EP 2 014 201 B1, EP 735 121 B1, DE 19 632 182 B4 und EP 896 807 B1 beschrieben. Die US 2015 0 315 421 A1 beschreibt eine Anwendung, bei welcher der den Klebemittel lösende Kraftvektor in einem Winkel größer als 45° zur Verklebungsebene steht.

Die Darreichungsform kann eine Vielzahl von Klebemittelanordnungen umfassen, die parallel zueinander beabstandet auf dem Trägerblatt angeordnet sind, wobei die Darreichungsform insbesondere wenigstens 3, vorzugsweise wenigstens 5, weiter bevorzugt wenigstens 7, besonders bevorzugt wenigstens 9 Klebemittelanordnungen je Trägerblatt umfasst. Dadurch ist es möglich, die Darreichungsform flexibel hinsichtlich seiner Kapazität für Klebemittel anzupassen.

Nach einer bevorzugten Ausführungsform der erfindungsgemäßen Darreichungsform umfasst diese Klebemittel, deren Klebeeigenschaften auf beiden Hauptflächen unterschiedlich sind. Dies kann technisch beispielsweise durch Verwendung zweier unterschiedlicher Haftklebstoffe für die Hauptflächen des Klebemittels realisiert werden. Der Vorteil besteht darin, dass eine gesonderte Kennzeichnung der unterschiedlichen Klebeflächen für den Verbraucher wegen der Lage der Klebemittel auf dem Trägerblatt nicht mehr erforderlich ist.

So kann beispielsweise eine Seite des Klebemittels besonders gut für eine Verklebung auf Fliesen und die andere für eine Verklebung von Metalloberflächen formuliert sein. Damit könnte ein Metallhaken auf einer Fliesenoberfläche verklebt werden, wobei eine fehlerhafte Zuordnung der Klebeflächen aufgrund der vorgenannten Unterscheidbarkeit weitestgehend vermieden wird.

## UV Schutz

Insbesondere Klebemittel, deren Haftklebemasse auf Gemischen mit Styrolblockcopolymer- oder Naturkautschuk-Harzen basieren, sind anfällig gegen thermooxidative Schädigung, Ozonschädigung sowie photo-oxidative Schädigung, besonders durch UV-Strahlung. Vorgenanntes gilt umso mehr für Haftklebemassen auf Basis von Styrolblockcopolymeren, die Elastomerketten mit ungesättigten C-C Bindungen enthalten, wie dies bei polybutadien- und polyisoprenhaltigen Styrolblockcopolymere der Fall ist.

Das Rezeptieren von Haftklebemassen auf Basis von Styrolblockcopolymeren berücksichtigt daher meist stabilisierende Maßnahmen. So werden entsprechenden Klebharzen bereits im Rahmen des Herstellprozesses Antioxidantien und auch Lichtschutzmittel zugesetzt. Zur Erzeugung eines ausreichenden Alterungsschutzes für die Klebmassecompoundierung, weitere Verarbeitungsschritte, Lagerzeiten sowie die Nutzungsdauer der die entsprechenden Haftklebemassen enthaltenden Produkte, werden derartigen Haftklebemassen bei ihrer Herstellung oft mehrere Stabilisatoren, wie z. B. primäre Antioxidantien, sekundäre Antioxidantien, C-Radikalfänger, Metallfänger sowie unterschiedliche Arten von Lichtschutzmitteln zugemischt. Eine Kunst dabei ist die besagten Stabilisatoren synergetisch so zu kombinieren, dass die erwünschte Wirkung maximiert wird, ohne die geforderten Produkteigenschaften negativ zu beeinflussen.

Eine hohe Alterungsstabilität ist für die genannten Klebstreifen insbesondere in Bezug auf ihre vielfältigen Anwendungsbereiche essentiell und auch die Anfälligkeit eines aus der Klebfuge hervorstehenden Anfassers bei solchen Klebfolien ist erkannt. So beschreibt die DE 42 22 849 einen Klebemittel und seine Verwendung für eine wiederablösbare Verklebung, wobei die an eine Schmalseite des Streifens grenzenden Flächenbereiche beidseits mit einer UV-undurchlässigen Abdeckung versehen ist, die zeitgleich als Anfasser zum Ziehen dient. Ziel des UV-undurchlässigen Anfassers ist vor allem die Vermeidung von Abrissen, wenn auf den Klebemittel nach Einwirkung von UV-Strahlung eine ihn ablösende Zugkraft wirkt.

In vorteilhafter Weiterbildung der erfindungsgemäßen Darreichungsform weist das entfaltete Faltblatt, das damit verbundene Trägerblatt und die Schutzfolie jeweils einen Transmissionsgrad gemäß DIN 10082:2009-09 von nicht mehr als 20 % für elektromagnetische Strahlung im Wellenlängenbereich von 280 nm bis 420 nm auf. Dies ist vorteilhaft, weil die Klebemittel so bereits durch Verpackungsbestandteile vor UV-Licht geschützt werden können, ohne dass hierfür weitere chemische oder verpackungstechnische Maßnahmen, wie beispielsweise individuelle Einzelverpackungen, erforderlich sind.

## Faltblatt

Moderne Varianten doppelseitig wirksamer Klebemittel zeigen heute auf geeigneten Untergründen hohe Halteleistungen, stellen dabei aber an erhöhte Anforderungen an die Anwender. Folglich ist bei der Verklebung der Klebemittel das Befolgen von Anwendungshinweisen zur Gewährleistung einer sicheren Verklebung wichtig.

Zur Bereitstellung von Anwendungshinweisen ist es bekannt, den Produkten einen Informationsträger beizulegen und zusammen in einer Umverpackung anzubieten. Der Informationsträger kann als Faltblatt realisiert sein, um eine angemessene Informationsmenge in gedruckter Form bereitstellen zu können, ohne die Umverpackung nennenswert zu vergrößern. Ein Faltblatt ist gemeinhin ein einseitig oder doppelseitig bedrucktes Flächenmaterial, üblicherweise Papier mit einer Grammatur zwischen 50 g/m$^2$ und 300 g/m$^2$, das einfach oder mehrfach gefaltet, beziehungsweise maschinell gefalzt ist. Umgangssprachlich werden für Faltblätter auch Begriffe wie Packungsbeilage oder Beipackzettel verwendet.

Vor dem Falz- bzw. Faltvorgang kann entlang der vorgesehenen Falzlinie insbesondere bei Flächenmaterialien höherer Grammatur, eine Rillung oder Perforation eingebracht werden um den Faltvorgang zu unterstützen.

Zumeist verlaufen bei einem Faltblatt alle Faltlinien parallel zu den Kanten des rechteckigen oder quadratischen Flächenmaterials wie einem Papierbogen. Ebenfalls verwendet werden polygonale Zuschnitte, mit funktionalen Elementen wie beispielsweise Verschlusslaschen. Eine Faltbogen mit einer entsprechenden selbstklebend ausgerüsteten Verschlusslasche ist in der JP 2013 035 170 A gezeigt. Bekannt sind auch Faltungen, die in einem spitzen oder stumpfen Winkel zur nächstliegenden Kante ausgeführt sind oder diagonal von einer Ecke des Papierbogens zu einer gegenüberliegenden verlaufen.

Im einfachsten Fall wird zur Herstellung eines Faltblatts das Flächenmaterial um einen Mittelfalz auf sich selbst gefaltet. Solche Halbierungsfaltungen halbieren die Fläche der Normalprojektion des Flächenmaterials mit jeder Faltung, zeitgleich verdoppelt sich die Zahl der deckungsgleich übereinanderliegenden Lagen beziehungsweise Seiten. Die Anzahl der möglichen Halbierungsfaltungen in Abhängigkeit der Mindestlänge des flächigen Werkstoffes ist durch die von Britney Gallivan gefundene Funktion $L(n) = \frac{1}{6}\pi d(2^n + 4)(2^n - 1)$ ge-

geben. Dabei ist L(n) die minimale notwendige Länge des Flächenmaterials, n die Anzahl der parallelen Halbierungsfaltungen senkrecht zur Länge L(n) und d die Dicke des flächigen Werkstoffes.

Bei Kreuzfaltungen ist jeder weitere Mittelfalz senkrecht zum Ersten orientiert. Durch die Funktion

$$W(n) = 2\pi d^{\frac{3}{2}(n-1)}$$ kann die Anzahl der möglichen Kreuzfaltungen n zur minimalen Seitenlänge W abgeschätzt werden. Die Formel ist für flächige quadratische Werkstoffe mit einer Kantenlänge W definiert, kann aber auch für Seitenverhältnisse von 1:2 oder 1:√2 angewendet werden, wobei die Kantenlänge der kürzeren Seite als W gesetzt wird.

Eine weitere Art eines grundlegenden Faltschemas ist die Leporello- oder Z-Faltung. Bei diesem mindestens zweistufigen Faltprozess alternieren die Faltrichtungen bei parallel zueinander orientierten Falzlinien. Häufig teilen die Falzlinien dabei das Papier in annähernd gleich große Flächen beziehungsweise Seiten. Die Art der entstehenden Faltlinien wechselt dabei. Auf eine sogenannte Bergfalte, bei der sich die Falzlinie aus Sicht des Betrachters vom Papier erhebt, folgt parallel dazu eine Talfalte, deren Grund tiefer liegt als die Papierebene.

Bei einem reinen Wickelfalz sind alle Faltlinien des entfalteten Flächenmaterials betrachtungsabhängig entweder Bergfalten oder Talfalten.

Verschiedene Faltschemata können kombiniert werden, beispielsweise kann einer Z-Faltung eine Kreuzfaltung vorrausgehen. Die Herstellung ein- und mehrteiliger Faltblätter ist beispielsweise in der DE 10 2013 106 126 A1 beschrieben.

In vorteilhafter Weiterbildung der erfindungsgemäßen Darreichungsform nach sind die weiteren (n-1) Faltungen in einer durch die erste durchgehende Talfalte definierten Halbfläche als Talfalte und in der anderen Halbfläche als Bergfalte ausgeführt. Hierdurch kann die Darreichungsform leicht entfaltet werden. Zudem kann sich der Endverbraucher dieses Faltmuster leicht einprägen, wenn er nach Entnahme eines oder mehrerer Klebemittel das Faltblatt wieder zusammenfalten möchte.

Die Darreichungsform kann so ausgestaltet sein, dass n größer oder gleich 4 ist, und das Faltblatt im gefalteten Zustand eine Tasche bildet, die alle damit verbundenen Trägerblätter von mindestens drei Seiten umschließt. Dadurch wird ein guter mechanischer UV-Schutz für die Klebemittel sichergestellt und zudem ist eine Entnahme der Klebemittel durch den Verbraucher nur möglich, wenn das Faltblatt vollständig entfaltet und damit die Anwendungshinweise vollständig sichtbar sind.

Das erfindungsgemäß verwendete Faltblatt hat, Vorder- und Rückseite mitgezählt, beispielsweise 8, 16 oder 32 Seiten.

Damit die Darreichungsform im zusammengefalteten Zustand des Faltblatts sich nicht unabsichtlich selbst entfaltet, kann die Darreichungsform hierfür mit einem oder auch mehreren wiederverschließbaren Verbindungselement(en) ausgerüstet sein. Hierfür ist mindestens ein zweites Verbindungselement vorgesehen, das zwei der 4n Seiten des Faltblatts wiederlösbar miteinander verbindet, und diese beiden Seiten durch die letzte der n-Faltungen

• entweder aufeinander gefaltet werden
• oder die beiden äußeren Seiten des gefalteten Faltblatts bilden

und diese beiden Seiten im entfalteten Zustand des Faltblatts auf der rückseitigen Fläche angeordnet sind, die in keinem Bereich mit einem Trägerblatt verbunden ist.

## Trägerblatt

Erfindungsgemäß ist vorgesehen, dass die Darreichungsform wenigstens ein Trägerblatt umfasst, das mit dem Faltblatt verbunden ist. Das Trägerblatt dient als Unterlage für die darauf angeordneten Klebemittel-Anordnungen. Außerdem kann das Trägerblatt der Darreichungsform eine zusätzliche mechanische Stabilität verleihen.

Das Trägerblatt kann aus unterschiedlichen Materialien aufgebaut sein, beispielsweise aus Papier oder Pappe, Kunststoff, Metall oder auch aus Kompositwerkstoffen, beispielsweise einer kunststoffbeschichteten Metallfolie. Das Trägerblatt ist erfindungsgemäß auf seiner Vorderseite mit einer anti-Haftbeschichtung versehen. Hierunter werden Beschichtungen verstanden, die es ermöglichen, dass mit einem Haftklebstoff versehene Klebemittel ohne Weiteres von dieser Oberfläche abgezogen werden können. Hierfür geeignete Oberflächenbeschichtungen sind dem Fachmann hinlänglich bekannt, beispielsweise silikonisiertes Papier oder Pappe.

Die Rückseite des Trägerblatts ist bevorzugt nicht mit einer anti-Haft Beschichtung versehen, um einen permanenten Verbund mit dem Faltblatt zu gewährleisten. Dabei ist die Verbindung des Trägerblatts mit dem Faltblatt vorzugsweise so ausgestaltet, dass sie nicht zerstörungsfrei gelöst werden kann. Damit kann verhindert werden, dass das die Klebemittel tragende Trägerblatt - absichtlich oder unabsichtlich - vom Faltblatt getrennt wird und dem Verbraucher damit die auf dem Faltblatt aufgedruckten Anwendungshinweise nicht mehr vorliegen. Zur Verbindung des Trägerblatts mit dem Faltblatt sind insbesondere stoffschlüssige Verbindungsmittel wie Klebstoffe, Hotmelts, Siegellacke oder Dispersionsleime geeignet, die bezüglich der beteiligten Fügepartner eine hohe Adhäsionskraft aufweisen. Auch durch formschlüssige Verbindungsverfahren, beispielsweise durch Tackern mit Heftklammern, Klammerlosheften oder Crimpen, kann eine dauerhafte Verbindung zwischen dem Faltblatt und Trägerblatt hergestellt werden.

Die Darreichungsform kann auch eine Vielzahl von Trägerblättern umfassen, insbesondere wenigstens 2, vorzugsweise wenigstens 3, weiter bevorzugt wenigstens 4 Trägerblätter. Dabei kann die Projektionen wenigstens zweier Trägerblätter innerhalb einer Seite des 4n-seitigen Faltblatts liegen. Es ist ebenso möglich, die Tragblätter derart anzuordnen, dass die Projektionen jedes der Trägerblätter einzeln innerhalb einer Seite des 4n-seitigen Faltblatts liegen.

Die vorliegende Erfindung wird im Folgenden anhand der Fig. 1 bis Fig. 10 näher erläutert. Darin zeigt

Fig. 1: eine Darreichungsform für doppelseitig wirksame Klebebandstreifen,

Fig. 2: eine Darstellung des Faltschemas der Darreichungsform,

Fig. 3: die Darreichungsform der Fig. 2 im gefalteten Zustand,

Fig. 4: einen Teilschnitt A-A' der Darreichungsform aus Fig. 3 im gefalteten Zustand,

Fig. 5: eine Klebemittel-Anordnung in der Draufsicht (a) und in Profilansicht (b),

Fig. 6 eine weitere Ausführung der Darreichungsform im entfalteten Zustand,

Fig. 7 die Darreichungsform aus Fig. 6 nach der ersten Faltung,

Fig. 8 die Darreichungsform aus Fig. 6 nach der zweiten Faltung,

Fig. 9 die Darreichungsform aus Fig. 6 nach der dritten Faltung, sowie

Fig. 10 eine alternative Trägerblattanordnung mit mehreren Klebepads.

Angelehnt an das Yoshizawa-Randlett-System werden Talfalten als Strichlinie und Bergfalten als Strichzweipunktlinie gezeigt. Die Begriffe Falzung und Faltung - beziehungsweise falten und falzen - werden nachfolgend austauschbar verwendet, da es im Sinne der Erfindung gleichgültig ist, ob die Knickkanten mit einem Werkzeug oder manuell hergestellt werden.

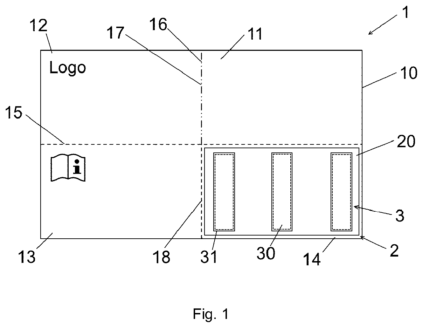

Fig. 1 zeigt eine erfindungsgemäße Darreichungsform 1 für doppelseitig selbstklebende Streifen. Die Darreichungsform 1 umfasst ein Faltblatt 10, eine Trägerblatt-Anordnung 2, sowie mehrere Klebemittel-Anordnungen 3 als Teil der Trägerblatt-Anordnung 2.

Jede Klebemittel-Anordnung 3 umfasst mindestens ein doppelseitig wirksames Klebemittel 30 mit einer ersten selbstklebenden Hauptfläche und einer zweiten selbstklebenden Hauptfläche, sowie eine Schutzfolie 31, welche die zweite selbstklebende Hauptfläche bedeckt.

Jede Trägerblattanordnung 2 umfasst ein Trägerblatt 20, das einseitig mit einer Trennschicht 21 versehen ist und mehrere Klebemittel-Anordnungen 3, die parallel beabstandet auf der Trennschicht 21 des Trägerblatts 20 angeordnet sind. Dabei haftet jede Klebemittel-Anordnung 3 mit ihrer ersten Klebefläche wiederablösbar auf der Trennschicht 21 des Trägerblatts 20, während die zweite Klebefläche von der Schutzfolie 31 ablösbar bedeckt ist.

Das Faltblatt 10 besitzt einen rechteckigen Umriss. Die Vorderseite des entfalteten Faltblatts 10 wird von einer ersten Faltlinie 15 und einer zweiten dazu senkrechten Faltlinie 16 in vier Faltblattseiten 11, 12, 13, 14 mit ähnlichem Flächeninhalt geteilt. Mit den weiteren vier Faltblattseiten der Rückseite ergibt sich so ein acht-seitiges Faltblatt 10.

Eine Faltblattseite 14 des vorderflächigen Faltblatts 10 ist mit der unbeschichteten Rückseite des Trägerblatts 20 verbunden. Die Verbindung zwischen der Rückseite des Trägerblatts 20 und der Vorderfläche des Faltblatts 10 ist nicht zerstörungsfrei lösbar. Das heißt, nach dem Lösen des Trägerblatt von der Vorderfläche des Faltblatts wäre das Trägerblatt oder das Faltblatt beschädigt. Im hier vorliegenden Ausführungsbeispiel wurde die Verbindung durch doppelseitig permanent klebende Verbindungselemente 22 hergestellt.

Die weiteren Faltblattseiten 11, 12, 13, die nicht durch eine Trägerblatt-Anordnung 2 verdeckt sind, tragen Anwendungshinweise in Text- und Bildform. Zusätzlich können Logos, Sicherheitsinformationen, maschinenlesbare Codes wie QR-Codes oder Barcodes und Herstellerdaten aufgedruckt sein.

Die Normalprojektion der Trägerblatt-Anordnung 2 auf das Faltblatt 10 liegt vollständig innerhalb der darunterliegenden Faltblattseite 14, so dass das Trägerblatt 20 und die darauf vorliegenden Klebemittel-Anordnungen 3 beim Faltvorgang nicht geknickt werden. Mit Sicht auf die vollständig entfaltete Vorderfläche des Faltblatts 10 ist die erste Faltlinie 15 eine durchgehende Talfalte, welche die Vorderfläche des Faltblatts in zwei Halbflächen teilt. Die zweite dazu senkrechte Faltlinie 16 wird von dieser Talfalte 15 in einen ersten Faltlinienabschnitt 17 und einen zweiten Faltlinienabschnitt 18 geteilt. Dabei ist der erste Faltlinienabschnitt 17 eine Bergfalte und der zweite Faltlinienabschnitt 18 eine Talfalte.

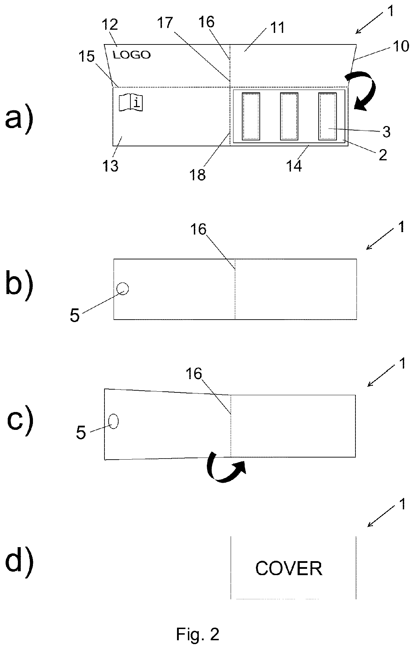

In Fig. 2 a - d ist ein Faltschema des in Fig. 1 gezeigten Ausführungsbeispiels einer erfindungsgemäßen Darreichungsform 1 gezeigt. Um die Darreichungsform 1 in ein kompaktes Maß zu überführen, wird das Faltblatt 10 der Darreichungsform 1 um die erste durchgehende Talfalte 15 auf ein halb so großes Maß gefaltet, wie es in Fig. 2b dargestellt ist. Anschließend erfolgt, wie in Fig. 2c gezeigt, eine weitere Halbierungsfaltung um die zweite Faltlinie 16, so dass die Flächenprojektion der Darreichungsform 1, wie in Fig. 2d gezeigt, auf ein Viertel reduziert ist. Die Darreichungsform 1 ist im gefalteten Zustand dann nicht wesentlich größer als die darin enthaltene Trägerblatt-Anordnung 2 mit den darauf angeordneten Klebemittel-Anordnungen 3. Gemäß diesem Faltschema ist eine Entnahme einer Klebemittelanordnung 3 nur nach der vollständigen Entfaltung der Darreichungsform 1 möglich, so dass der Blick des Anwenders mit hoher Wahrscheinlichkeit auf die Anwendungshinweise neben der Trägerblatt-Anordnung 2 gelenkt wird. Durch ein nicht-permanent klebendes und doppelseitig wirksames Verschlusselement 5, das an einer der beiden Seiten aufgebracht ist, die nach der letzten Faltung deckungsgleich übereinanderliegen, bleibt die Darreichungsform 1 bis zum nächsten Gebrauch sicher verschlossen.

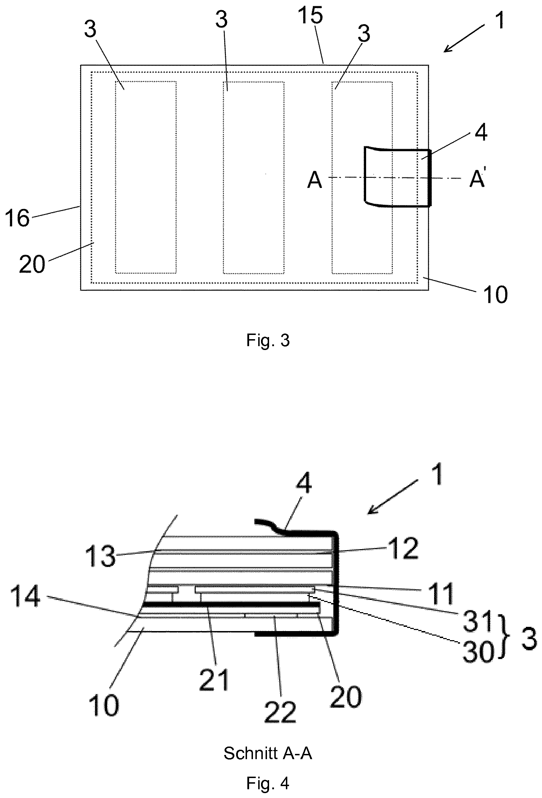

In Fig. 3 zeigt die Darreichungsform 1 aus Fig. 1, im gefalteten Zustand, die einen einseitig nicht-permanent klebenden Verschlussstreifen 4 trägt. Der Verschlussstreifen 4 verhindert, dass sich die Darreichungsform 1 unbeabsichtigt vor Gebrauch öffnet und ermöglicht es die Darreichungsform 1 nach Entnahme einer Klebemittel-Anordnung 3 wieder zu verschließen. Der Verschlussstreifen 4 verbindet hier die beiden Seiten, die im gefalteten Zustand der Darreichungsform 1 die äußeren beiden Seiten bilden.

Fig. 4 zeigt einen Querschnitt der Darreichungsform 1 im gefalteten und damit geschlossenen Zustand. Jedes Klebemittel 30 der Klebemittel-Anordnung 3 wird von mehreren Seiten durch mindestens einer Lage des Faltblatts 10 vor Umwelteinflüssen, wie Schmutz und UV-Strahlung, geschützt. Zusätzlich wirkt unter dem Klebemittel 30 das Trägerblatt 20 und über dem Klebemittel 30 die Schutzfolie 31 als wirksame UV-Barriere. In diesem Sinne ist es nicht zwingend notwendig, dass das Faltblatt 10, die Schutzfolie 31 oder das Trägerblatt 20 besonders niedrige Transmissionsgrade für die natürlicherweise erdnah auftretende UV-Strahlung besitzen, da sich die Extinktionen der beteiligten Lagen des Faltblatts 10, des Trägerblatts 20 und der Schutzfolie 31 multiplizieren und sich so die Intensität der einfallenden Strahlung spätestens nach der Durchquerung der Schutzfolie 31 oder des Trägerblattes 20 auf einen unschädlichen Wert vermindert hat.

Beispielhaft hätte sich eine normal zur Hauptfläche einstrahlende elektromagnetische Strahlung im Wellenbereich zwischen 280 nm und 420 nm, bereits auf weniger als 4 % ihrer ursprünglichen Intensität verringert, wenn sie zwei Lagen durchquert, die jeweils in diesem Wellenlängenbereich eine Transmission von weniger als 20 % aufweisen. Eine Vorschrift zur Ermittlung des Transmissionsgrad von Verpackungsmaterialien gibt die DIN 10082:2009-09.

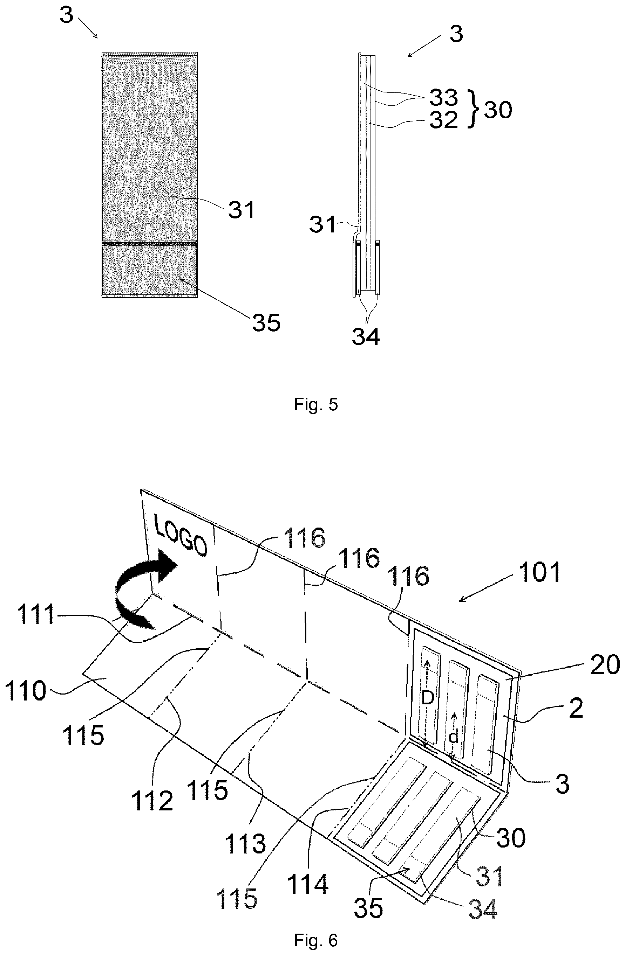

Fig. 5 zeigt eine Klebemittel-Anordnung 3 in der Draufsicht (Fig. 5a) und in der Seitenansicht (Fig. 5b). Die gezeigte Klebemittel-Anordnung 3 umfasst ein Klebemittel 30, bestehend aus einem Träger 32, der auf beiden Seiten von einer Haftschicht 33 bedeckt ist, sowie zwei Anfasserfolienstreifen 34 und einer Schutzfolie 31. Alternativ kann das Klebemittel 30 auch trägerlos ausgeführt sein, der hier mittig angeordnete Träger 32 entfällt in diesem Fall.

Angrenzend an eine freie Schmalseite des Klebemittels 30 sind zwei gegenüberliegende Bereiche der Haftschicht 33 an nach außen zeigenden Flächen jeweils von Anfasserfolienstreifen 34 bedeckt. Dadurch wird ein Anfasserbereich 35 geschaffen, der es dem Anwender ermöglicht den Klebemittel 30 an diesem beidseits nicht klebrigen Bereich zwischen zwei Fingerbeeren zu ergreifen und gegebenenfalls auch von einer Oberfläche zu lösen auf welcher der Klebemittel 30 haftet.

Die Schutzfolie 31 der Klebemittel-Anordnung 3 bedeckt in der gezeigten Ausführung zumindest teilweise einen der beiden Anfasserfolienstreifen 34 und vollständig die vom Anfasserfolienstreifen 34 nicht bedeckte Haftschicht 33. Nur eine der beiden klebenden Hauptflächen wird pro Klebemittel-Anordnung 3 von der Schutzfolie 31 bedeckt dabei pro Klebemittel-Anordnung 3 nur eine der beiden klebenden Hauptflächen 33 beziehungsweise den auf dieser Hauptfläche angeordneten Anfasserfolienstreifen 34. Die gegenüberliegende klebende Hauptfläche des Klebemittels 30 haftet auf dem hier nicht gezeigten Trägerblatt der erfindungsgemäßen Darreichungsform.

In Fign. 6 - Fig. 9 ist eine 16-seitige Ausführung einer Darreichungsform 101 für doppelseitig wirksame Klebemittel-Anordnungen 3 und ein dazugehöriges Faltschema dargestellt.

Fig. 6 zeigt die Darreichungsform 101 mit Blick auf die entfaltete Vorderfläche des im Querformat vorliegenden Faltbogens 101 mit zwei Trägerblattanordnungen 2. Die Vorderfläche des Faltbogens 110 wird von einer ersten durchgehenden Talfalte 111, die sich parallel zur längeren Querseite der Darreichungsform 101 orientiert, in zwei gleich große Halbflächen geteilt. Diese erste durchgehende Faltlinie 111 teilt drei weitere senkrecht dazu orientierte Faltlinien 112, 113, 114 in jeweils zwei Faltlinienbereiche mit jeweils alternierender Faltrichtung. So sind die Faltlinienbereiche der drei weiteren Faltlinien 112, 113, 114 in obenliegenden Halbfläche als Talfalte 116 ausgeführt und die Faltlinienbereiche in der untenliegenden Halbfläche als Bergfalte 115.

Die Gemeinschaft aller Faltlinien 111 - 114 teilt die Vorderfläche des Faltbogens 110 in acht Seiten, jeweils vier in jeder der vorher definierten Halbflächen. Insgesamt gibt sich mit der ebenso achtseitigen Rückfläche ein 16-seitiges Faltblatt 110. Zwei der acht innenliegenden Seiten tragen jeweils eine Trägerblatt-Anordnung 2 mit wiederum jeweils drei Klebemittel-Anordnungen 3. Jede Trägerblatt-Anordnung 2 umfasst ein Trägerblatt 20, das permanent durch ein oder mehrere Verbindungselemente mit einer Seite auf der Vorderfläche des Faltblattbogens 110 verbunden ist. Als Verbindungselemente können Streifen eines permanent klebendes Transfer-Tapes verwendet werden, wie sie in Kleberollern, beispielsweise in dem Kleberoller ecoLogo® Artikelnummer 59100 der tesa SE Norderstedt enthalten sind. Die Verbindungselemente sind zwischen den unbeschichteten Rückseiten der Trägerblätter 20 und der entsprechenden Seite des Faltbogens 110 angeordnet und in der Zeichnung verdeckt.

Die Klebemittel-Anordnungen 3 haften jeweils mit einem Bereich einer ihrer beiden klebenden Hauptflächen auf der beschichteten Vorderseite des Trägerblatts 20. Die gegenüberliegende klebende Hauptfläche ist von einem Schutzfolienstreifen 31 bedeckt. Zusätzlich kann der Klebemittel 30 der Klebemittel-Anordnung 3 wie oben beschrieben durch Anfasserfolienstreifen 34 einen Anfasserbereich 35 besitzen, um die Handhabung des Klebemittels 30 zu vereinfachen. Besonders vorteilhaft sind die Klebemittel-Anordnungen 3 auf dem Trägerblatt und dem Faltbogen so positioniert, dass die Anfasserbereiche 35 von der ersten durchgehenden Talfalte 111 abgewandt sind. Dies ist der Fall, wenn die parallel zur zweiten Faltlinie 112 gemessene Distanz D zwischen dem Mittelpunkt eines Anfasserbereiches 35 eines Klebemittels 30 und der ersten durchgehenden Talfalte 111 größer ist, als die Distanz d zwischen den klebenden Bereichen der Hauptfläche desselben Klebemittels und der ersten durchgehenden Talfalte 111. Die Vorteile der beschriebenen Positionierung der Anfasserbereiche werden unten näher beschrieben.

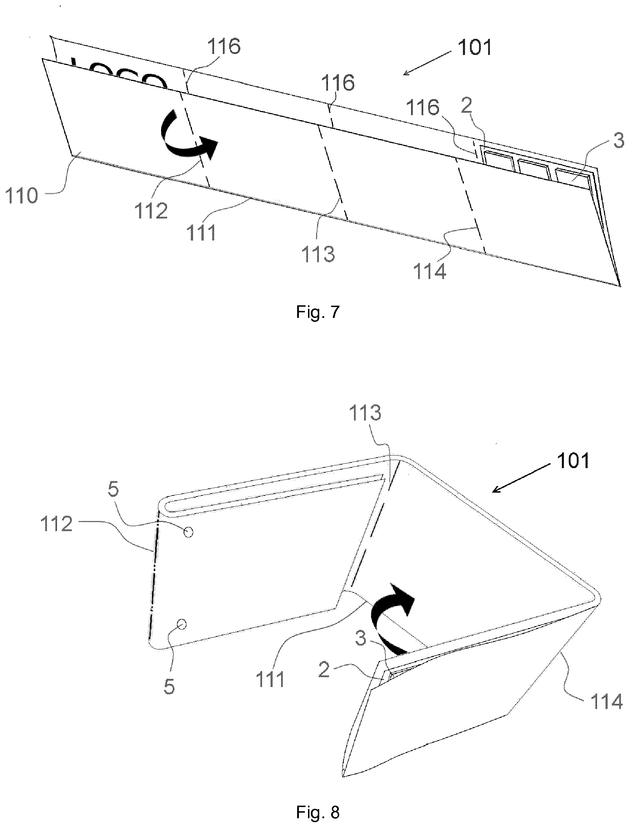

Fig. 7 zeigt die Darreichungsform 101 nach der ersten Faltung des Faltbogens 110 um die durchgehende Talfalte 111.

Fig. 8 zeigt die Darreichungsform 101 nach der zweiten Faltung um die zweite Faltlinie 112. Abgebildet sind auch die nicht-permanent wirkenden Verschlusselemente 5, hier durch zwei wiederholt klebende und wiederablösbare Klebepunkte aus einem hochviskos-flexibel eingestellten Schmelzklebstoff mit hoher Kohäsion und geringer Adhäsion gebildet sind.

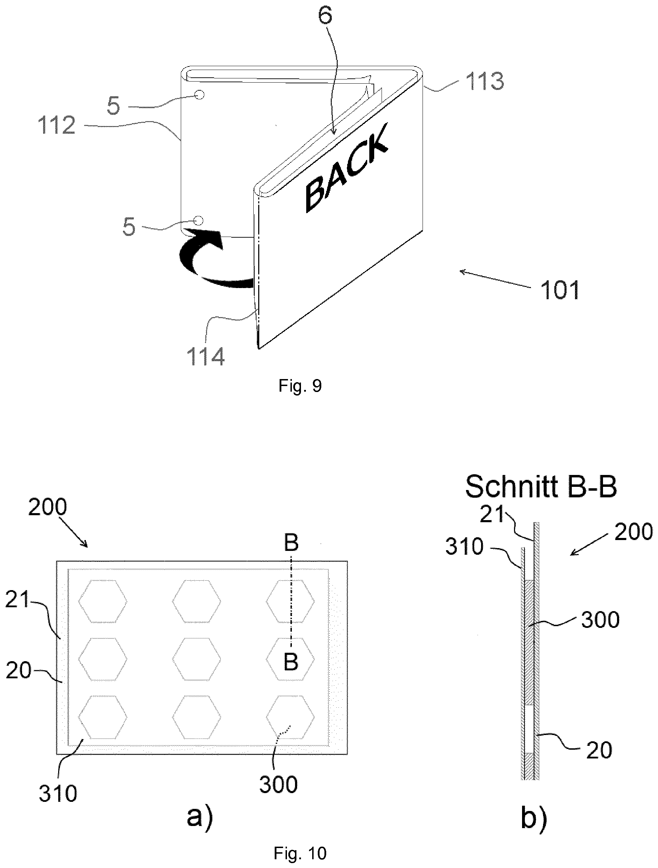

Fig. 9 zeigt die Darreichungsform 101 nach der dritten Faltung um die dritte Faltlinie 114. Die letzte Faltung um die vierte Faltlinie 113 ist angedeutet. Die nun verdeckten Trägerblatt-Anordnungen liegen mit den Klebemittel-Anordnungen in einer Tasche 6, die durch den Faltplan nach Fign. 6 - 9 gebildet wurde, und ist nach dem Verschließen der Darreichungsform mittels der nicht-permanenten Verschlusselemente 5 geschützt. Die Verschlusselemente sind auf einer der beiden oder auf beiden Seiten angeordnet, die durch die letzte Faltung deckungsgleich zur Anlage kommen, also nach der letzten Faltung aufeinander liegen. Der Schutz der gegebenenfalls UV-sensiblen Haftschicht der Klebemittel kann erhöht werden, indem die Klebemittel-Anordnungen so positioniert werden, dass die Anfasserbereiche 35 zur Öffnung der Tasche 6 gerichtet sind. Dies ist bei der hier in den Figuren 6 - 9 gezeigten Ausführungsform der Fall, wenn wie in Fig. 6 gut erkennbar die Anfasserbereiche 35 der Klebemittel 30 von der ersten durchgehenden Talfalte 111 weg zeigen. Sollte UV-Strahlung durch die einzige offene Seite in die Tasche 6 eindringen, treffen sie auf die Anfasserbereiche der Klebemittel-Anordnungen. Diese bilden zum einen durch die Anfasserfolienstreifen 34 eine zusätzliche Barriere für UV-Strahlung, zum anderen ist eine Verringerung der Klebkraft in einem Bereich der nicht kleben soll wenig nachteilig.

Beispielhaft kann als Ausgangsmaterial zur Herstellung eines nahezu für UV-Strahlung undurchlässiger Anfasserfolienstreifen 34 das silikonisierte Trennpapier B 900 WM 52B20 weiß in 3 $\mu$m Stärke, hergestellt von der Laufenberg GmbH, Krefeld, verwendet werden. Die Messung mit einem dem Messgerät Kontron UVIKON 860 Spektralphotometer mit Ulbricht'scher Kugel ergab eine Transmission von nicht mehr als 20 % im Wellenlängenbereich zwischen 280 nm und 420 nm.

Fig. 10 a und b zeigen eine alternative Trägerblattanordnung 200 mit einem einseitig mit einem Trennmittel 21 beschichteten Trägerblatt 20, neun darauf in einer 3 $\times$ 3 Matrix parallel zueinander beabstandet angeordnete selbstklebende Pads 300 und einem Schutzfolienzuschnitt 310. Der Schutzfolienzuschnitt 310 bedeckt im Unterschied zu den vorhergehenden Ausführungen mehrere doppelseitig wirksame Klebemittel 300. Genauso ist es möglich, jedes auf dem Trägerblatt 20 angeordnete Klebemittel 300 mit einem separaten Schutzfolienabschnitt zu bedecken. Analog zu den vorherigen Ausführungen ist vorgesehen die Trägerblattanordnung 200 über die unbeschichtete Rückseite des Trägerblatts 20 mit einer vorderseitigen Dokumentenseite des Faltblattbogens permanent zu verbinden.

Vorteilhaft können bei allen beschriebenen Ausführungen der Darreichungsform die Klebemittel-Anordnungen nur entnommen werden, nachdem das Faltblatt der Darreichungsform vollständig entfaltet wurde. Informationen und Anwendungshinweise, die auf dem Faltblatt der Darreichungsform angegeben sind, lenken so ohne zusätzliche Maßnahmen die Aufmerksamkeit des Anwenders auf sich.

Insbesondere bei asymmetrisch aufgebauten Klebemittel-Anordnungen oder Klebemitteln, deren selbstklebende Flächen unterschiedliche Eigenschaften aufweisen, ergibt sich zudem der Vorteil, die verschiedenen selbstklebenden Hauptflächen ohne zusätzliche Mittel wie Aufdrucke oder farbige Schutzfolien, unterscheidbar zu machen. Vorteilhaft ist zudem die eingängige Verwendungsweise, indem eine klebende Hauptfläche des Klebemittels direkt nach der Entnahme freiliegt und auf einen Untergrund durch Andrücken aufgeklebt werden kann. Weiterhin ist vorteilhaft, dass die in der Darreichungsform enthaltenen Klebemittel bei Nichtgebrauch vor Umwelteinflüssen, insbesondere UV-Strahlung geschützt sind und sich platzsparend und organisiert ablegen lassen.

**Patentansprüche**

1. Darreichungsform (1, 101) zur Entnahme wenigstens einer doppelseitig wirksamen Klebemittel-Anordnung (3), umfassend:

   (a) mindestens ein Trägerblatt (20) mit einer anti-Haft beschichteten Vorderseite (21),
   (b) wenigstens eine auf dem Trägerblatt (20) angeordnete Klebemittel-Anordnung (3) und
   (c) ein 4n-seitiges Faltblatt (10, 110), dessen Vorderfläche und Rückfläche in entfalteter Form durch n Faltlinien in jeweils 2n Seiten unterteilt werden, wobei n eine natürliche Zahl $\geq$ 1 ist,

   wobei die der beschichteten Vorderseite (21) gegenüberliegende Rückseite des Trägerblatts (20) durch ein Verbindungsmittel (22) permanent mit einem vorderseitigen Flächenbereich des entfalteten Faltblatts (10, 110) verbunden ist und die Projektion jedes Trägerblatts (20) innerhalb einer Seite des 4n-seitigen Faltblatts (10, 110) liegt, wobei die Klebemittel-Anordnung (3) ein flächiges und auf seinen beiden Hauptflächen haftklebriges Klebemittel (30) und eine dessen erste Hauptfläche weitestgehend vollständig abdeckende Schutzfolie (31) umfasst und die Klebemittel-Anordnung (3) über die zweite Hauptfläche des Klebemittels (30) ablösbar auf der beschichteten Vorderseite (21) des Trägerblatts (20) haftet,

**dadurch gekennzeichnet, dass**

eine erste Faltlinie (15, 111) der n Faltlinien das entfaltete Faltblatt (10, 110) als Halbierungsfaltung vorderseitig in zwei Halbflächen teilt und mit Sicht auf die entfaltete Vorderseite des Faltblatts (10, 110) als durchgehende Talfalte ausgebildet ist,
und die weiteren (n-1) Faltlinien die erste Faltlinie (15, 111) im rechten Winkel kreuzen und die (n-1) weiteren Faltlinien bereichsweise als Talfalte und bereichsweise als Bergfalte ausgeführt sind, wobei die Faltrichtung der weiteren (n-1) Faltlinien jeweils am Kreuzungspunkt wechselt.

2. Darreichungsform nach Anspruch 1, **dadurch gekennzeichnet, dass** die weiteren (n-1) Faltungen, in einer durch die erste durchgehende Talfalte (15, 111) definierten Halbfläche als Talfalte und in der anderen Halbfläche als Bergfalte ausgeführt sind.

3. Darreichungsform nach Anspruch 1 oder 2, **dadurch gekennzeichnet, dass** n größer oder gleich 4, und das Faltblatt (10, 110) im gefalteten Zustand eine Tasche bildet, die alle mit dem Faltblatt (10, 110) verbundenen Trägerblätter (20) von mindestens drei Seiten umschließt.

4. Darreichungsform nach einem der vorstehenden Ansprüche, **dadurch gekennzeichnet, dass** mindestens ein zweites Verbindungselement (5) vorgesehen ist, das zwei der 4n Seiten des Faltblatts (10, 110) wiederlösbar miteinander verbindet, und diese beiden Seiten durch die letzte der n-Faltungen

• entweder aufeinander gefaltet werden
• oder die beiden äußeren Seiten des gefalteten Faltblatts bilden

und diese beiden Seiten im entfalteten Zustand des Faltblatts (10, 110) auf der rückseitigen Fläche angeordnet sind, die in keinem Bereich mit einem Trägerblatt (20) verbunden ist.

5. Darreichungsform nach einem der vorstehenden Ansprüche, **dadurch gekennzeichnet, dass** diese eine Vielzahl Trägerblätter (20) umfasst, insbesondere wenigstens 2, vorzugsweise wenigstens 3, weiter bevorzugt wenigstens 4 Trägerblätter (20).

6. Darreichungsform nach Anspruch 5, **dadurch gekennzeichnet, dass** die Projektionen wenigstens zweier Trägerblätter (20) innerhalb einer Seite des 4n-seitigen Faltblatts (10, 110) liegt.

7. Darreichungsform nach einem der vorstehenden Ansprüche, **dadurch gekennzeichnet, dass** die Rückseite des Trägerblatts (20) nicht mit einer anti-Haft Beschichtung versehen ist.

8. Darreichungsform nach einem der vorstehenden Ansprüche, **dadurch gekennzeichnet, dass** die Verbindung des Trägerblatts (20) mit dem Faltblatt (10, 110) nicht zerstörungsfrei gelöst werden kann.

9. Darreichungsform nach einem der vorstehenden Ansprüche, **dadurch gekennzeichnet, dass** diese eine Vielzahl von Klebemittelanordnungen (30) umfasst, die parallel zueinander beabstandet auf dem Trägerblatt (20) angeordnet sind, wobei die Darreichungsform insbesondere wenigstens 3, vorzugsweise wenigstens 5, weiter bevorzugt wenigstens 7, besonders bevorzugt wenigstens 9 Klebemittelanordnungen (30) je Trägerblatt (20) umfasst.

10. Darreichungsform nach einem der vorstehenden Ansprüche, **dadurch gekennzeichnet, dass** das Klebemittel (30) zugentklebbar ist und an zwei vicinal gegenüberliegenden Teilbereichen seiner selbstklebenden Hauptflächen in der Nähe eines freien Endes des Klebemittels (30) nicht klebend ausgerüstet sind, um einen nicht klebenden Anfasserbereich (35) zur Handhabung des Klebemittels (30) zu bilden.

11. Darreichungsform nach Anspruch 9, **dadurch gekennzeichnet, dass** die Normalprojektion des Anfasserbereiches (35) des Klebemittels (30) auf das Faltblatt (10, 110) in einer Richtung parallel zur zweiten Faltlinien (16, 112) weiter von der ersten durchgehenden Talfalte (15, 111) entfernt ist, als der Mittelpunkt jeder der klebenden Hauptflächen des selben Klebemittels (30).

12. Darreichungsform nach einem der vorstehenden Ansprüche, **dadurch gekennzeichnet, dass** die Klebeeigenschaften des Klebemittels (30) auf seinen beiden Hauptflächen unterschiedlich sind, wobei das Klebemittels (30) auf seinen beiden Hauptflächen insbesondere zwei unterschiedliche Haftklebstoffe aufweist.

13. Darreichungsform nach einem der vorstehenden Ansprüche, **dadurch gekennzeichnet, dass** das entfaltete Faltblatt, das damit verbundene Trägerblatt (20) und die Schutzfolie (31) jeweils einen Transmissionsgrad gemäß DIN 10082:2009-09 von nicht mehr als 20 % für elektromagnetische Strahlung im Wellenlängenbereich von 280 nm bis 420 nm aufweisen.

14. Darreichungsform nach einem der vorstehenden Ansprüche, **dadurch gekennzeichnet, dass** der vorderseitige Flächenbereich des entfalteten Faltblatts (10, 110) in dem nicht durch das Trägerblatt (20) abgedeckten Bereich wenigstens abschnittsweise bedruckt ist, wobei die Bedruckung eine Handhabungsvorschrift zur Anwendung des Klebemittels (30) umfasst.

## Claims

1. Presentation form (1, 101) for the purpose of removing at least one adhesive-means arrangement (3) which is effective on two sides, comprising:

   (a) at least one backing sheet (20) with a front side (21) having an anti-adhesion coating,
   (b) at least one adhesive-means arrangement (3) arranged on the backing sheet (20) and
   (c) a folding sheet (10, 110) which has 4n sides and the front face and back face of which in the unfolded form are each subdivided into 2n sides by n fold lines, wherein n is a natural number $\geq 1$,

   wherein the back side, which is opposite to the coated front side (21), of the backing sheet (20) is connected permanently to a front-side face region of the unfolded folding sheet (10, 110) by a connecting means (22) and the projection of each backing sheet (20) lies within one side of the folding sheet (10, 110) having 4n sides, wherein the adhesive-means arrangement (3) comprises an adhesive means (30) over its surface area which is tacky on its two main faces and a protective film (31) which largely entirely covers its first main face, and the adhesive-means arrangement (3) adheres detachably to the coated front side (21) of the backing sheet (20) via the second main face of the adhesive means (30),

   **characterized in that**
   a first fold line (15, 111) of the n fold lines divides the unfolded folding sheet (10, 110) in the form of a bisecting fold into two half-faces on the front side and is in the form of a continuous valley fold from the perspective of the unfolded front side of the folding sheet (10, 110),
   and the further (n-1) fold lines intersect the first fold line (15, 111) at a right angle and the (n-1) further fold lines are designed in certain regions as valley folds and in certain regions as mountain folds, wherein the fold direction of the further (n-1) fold lines respectively changes at the intersection point.

2. Presentation form according to Claim 1, **characterized in that** the further (n-1) folds are designed as valley folds in a half-face defined by the first continuous valley fold (15, 111) and as mountain folds in the other half-face.

3. Presentation form according to Claim 1 or 2, **characterized in that** n is greater than or equal to 4, and the folding sheet (10, 110) in the folded state forms a pocket which encloses all backing sheets (20) connected to the folding sheet (10, 110) on at least three sides.

4. Presentation form according to one of the preceding claims, **characterized in that** at least one second connecting element (5) is provided which redetachably connects two of the 4n sides of the folding sheet (10, 110) to one another, and, by virtue of the last of the n folds, these two sides

   • either are folded one on top of the other
   • or form the two outer sides of the folded folding sheet

   and these two sides in the unfolded state of the folding sheet (10, 110) are arranged on the back-side face, which is not connected to a backing sheet (20) in any region.

5. Presentation form according to one of the preceding claims, **characterized in that** it comprises a multiplicity of backing sheets (20), in particular at least 2, preferably at least 3, further preferably at least 4 backing sheets (20).

6. Presentation form according to Claim 5, **characterized in that** the projections of at least two backing sheets (20) lie within one side of the folding sheet (10, 110) having 4n sides.

7. Presentation form according to one of the preceding claims, **characterized in that** the back side of the backing sheet (20) is not provided with an anti-adhesion coating.

8. Presentation form according to one of the preceding claims, **characterized in that** the connection of the backing sheet (20) to the folding sheet (10, 110) cannot be detached non-destructively.

9. Presentation form according to one of the preceding claims, **characterized in that** it comprises a multiplicity of adhesive-means arrangements (30), which are arranged spaced apart and parallel to one another on the backing sheet (20), wherein the presentation form comprises in particular at least 3, preferably at least 5, further preferably at least 7, especially preferably at least 9 adhesive-means arrangements (30) per backing sheet (20).

10. Presentation form according to one of the preceding claims, **characterized in that** the adhesive means (30) can be pulled off and does not have an adhesive finish on two adjacently oppositely situated sub-regions of its self-adhesive main faces close to a free end of the adhesive means (30), in order to form a non-adhesive handling region (35) for handing the adhesive means (30).

11. Presentation form according to Claim 9, **characterized in that** the normal projection of the handling region (35) of the adhesive means (30) onto the folding sheet (10, 110) in a direction parallel to the second fold lines (16, 112) is further away from the first continuous valley fold (15, 111) than the centre point of each of the adhesive main faces of the same adhesive means (30).

12. Presentation form according to one of the preceding claims, **characterized in that** the adhesive properties of the adhesive means (30) are different on its two main faces, wherein the adhesive means (30) has in particular two different adhesive substances on its two main faces.

13. Presentation form according to one of the preceding claims, **characterized in that** the unfolded folding sheet, the backing sheet (20) connected thereto, and the protective film (31) each has a transmissivity in accordance with DIN 10082:2009-09 of at most 20% to electromagnetic radiation in the wavelength range of 280 nm to 420 nm.

14. Presentation form according to one of the preceding claims, **characterized in that** the front-side face region of the unfolded folding sheet (10, 110) is printed at least in certain portions in the region not covered by the backing sheet (20), wherein the printing comprises handling instructions for applying the adhesive means (30) .

**Revendications**

1. Forme de présentation (1, 101) pour le prélèvement d'au moins un agencement d'agent adhésif double face (3), comprenant :

(a) au moins une feuille de support (20) ayant un côté avant (21) revêtu d'un revêtement antiadhésif,
(b) au moins un agencement d'agent adhésif (3) agencé sur la feuille de support (20) et

(c) une feuille pliable à 4n côtés (10, 110), dont la surface avant et la surface arrière sont divisées, sous forme dépliée, par n lignes de pliage en 2n côtés respectifs, n étant un nombre naturel ≥ 1,

le côté arrière de la feuille de support (20) opposé au côté avant revêtu (21) étant relié en permanence par un agent de liaison (22) à une zone de surface côté avant de la feuille pliable dépliée (10, 110) et la projection de chaque feuille de support (20) se situant à l'intérieur d'un côté de la feuille pliable à 4n côtés (10, 110), l'agencement d'agent adhésif (3) comprenant un adhésif (30) plat et collant sur ses deux surfaces principales, et un film protecteur (31) recouvrant presque entièrement sa première surface principale, et l'agencement d'agent adhésif (3) adhérant de manière détachable au côté avant revêtu (21) de la feuille de support (20) par l'intermédiaire de la deuxième surface principale de l'agent adhésif (30),

**caractérisé en ce que**
une première ligne de pliage (15, 111) parmi les n lignes de pliage divise la feuille pliable dépliée (10, 110) en deux demi-surfaces en tant que pli de dédoublement sur le côté avant et est réalisée en tant que pli de creux continu en regardant le côté avant déplié de la feuille pliable (10, 110), et les (n-1) autres lignes de pliage croisent la première ligne de pliage (15, 111) à angle droit et les (n-1) autres lignes de pliage sont réalisées par zones en tant que pli de creux et par zones en tant que pli de crête, la direction de pliage des (n-1) autres lignes de pliage changeant à chaque fois au point de croisement.

2. Forme de présentation selon la revendication 1, **caractérisée en ce que** les (n-1) autres plis sont réalisés en tant que pli de creux dans une demi-surface définie par le premier pli de creux continu (15, 111) et sous forme de pli de crête dans l'autre demi-surface.

3. Forme de présentation selon la revendication 1 ou 2, **caractérisée en ce que** n est supérieur ou égal à 4, et la feuille pliable (10, 110) forme, à l'état plié, une poche qui entoure toutes les feuilles de support (20) reliées à la feuille pliable (10, 110) par au moins trois côtés.

4. Forme de présentation selon l'une quelconque des revendications précédentes, **caractérisée en ce qu'**au moins un deuxième élément de liaison (5) est prévu, qui relie entre eux de manière détachable deux des 4n côtés de la feuille pliable (10, 110), et ces deux côté sont

- soit pliés l'un sur l'autre par le dernier des n plis,
- soit forment les deux côtés extérieurs de la feuille pliable pliée,

et ces deux côtés sont agencés, à l'état déplié de la feuille pliable (10, 110), sur la surface côté arrière qui n'est reliée dans aucune zone à une feuille de support (20) .

**5.** Forme de présentation selon l'une quelconque des revendications précédentes, **caractérisée en ce que** celle-ci comprend une pluralité de feuilles de support (20), notamment au moins 2, de préférence au moins 3, de manière davantage préférée au moins 4 feuilles de support (20).

**6.** Forme de présentation selon la revendication 5, **caractérisée en ce que** les projections d'au moins deux feuilles de support (20) se situent à l'intérieur d'un côté de la feuille pliable à 4n côtés (10, 110).

**7.** Forme de présentation selon l'une quelconque des revendications précédentes, **caractérisée en ce que** le côté arrière de la feuille de support (20) n'est pas pourvu d'un revêtement antiadhésif.

**8.** Forme de présentation selon l'une quelconque des revendications précédentes, **caractérisée en ce que** la liaison de la feuille de support (20) à la feuille pliable (10, 110) ne peut pas être rompue sans destruction.

**9.** Forme de présentation selon l'une quelconque des revendications précédentes, **caractérisée en ce que** celle-ci comprend une pluralité d'agencements d'agent adhésif (30), qui sont agencés parallèlement à distance les uns des autres sur la feuille de support (20), la forme de présentation comprenant notamment au moins 3, de préférence au moins 5, de manière davantage préférée au moins 7, de manière particulièrement préférée au moins 9 agencements d'agent adhésif (30) par feuille de support (20) .

**10.** Forme de présentation selon l'une quelconque des revendications précédentes, **caractérisée en ce que** l'agent adhésif (30) peut être décollé par traction et, deux zones partielles vicinales opposées de ses surfaces principales auto-adhésives sont configurées sous forme non adhésive à proximité d'une extrémité libre de l'agent adhésif (30), afin de former une zone de préhension non adhésive (35) pour la manipulation de l'adhésif (30).

**11.** Forme de présentation selon la revendication 9, **caractérisée en ce que** la projection normale de la zone de préhension (35) de l'agent adhésif (30) sur la feuille pliable (10, 110) dans une direction parallèle aux deuxièmes lignes de pliage (16, 112) est plus éloignée du premier pli de creux continu (15, 111) que le centre de chacune des surfaces principales adhésives du même agent adhésif (30).

**12.** Forme de présentation selon l'une quelconque des revendications précédentes, **caractérisée en ce que** les propriétés adhésives de l'agent adhésif (30) sur ses deux surfaces principales sont différentes, l'agent adhésif (30) présentant notamment deux matières adhésives sensibles à la pression différentes sur ses deux surfaces principales.

**13.** Forme de présentation selon l'une quelconque des revendications précédentes, **caractérisée en ce que** la feuille pliable dépliée, la feuille de support (20) qui lui est reliée et le film protecteur (31) présentent chacun un degré de transmission selon la norme DIN 10082:2009-09 qui n'est pas supérieur à 20 % pour le rayonnement électromagnétique dans la plage de longueurs d'onde allant de 280 nm à 420 nm.

**14.** Forme de présentation selon l'une quelconque des revendications précédentes, **caractérisée en ce que** la zone de surface avant de la feuille pliable dépliée (10, 110) est imprimée au moins par sections dans la zone non recouverte par la feuille de support (20), l'impression comprenant une instruction de manipulation pour l'application de l'agent adhésif (30).

Fig. 1

Fig. 2

Fig. 3

Schnitt A-A

Fig. 4

Fig. 5

Fig. 6

Fig. 7

Fig. 8

6

5

112

113

101

BACK

5

114

Fig. 9

200

21

20

310

B

B

300

a)

Schnitt B-B

21

310

200

300

20

b)

Fig. 10

**EP 3 436 538 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 96039339 A1
- EP 1103489 B1
- US 4024312 A
- DE 3331016
- WO 1992011332 A
- DE 4222849
- WO 1995006691 A
- DE 19531696
- DE 19626870
- DE 19649727
- DE 19649728
- DE 19649729
- DE 19708366
- DE 19720145
- WO 1999031193 A
- WO 1999037729 A
- EP 845517 B1
- EP 2014201 B1
- EP 735121 B1
- DE 19632182 B4
- EP 896807 B1
- US 20150315421 A1
- JP 2013035170 A
- DE 102013106126 A1